**Europäisches Patentamt**

(19) **European Patent Office**

**Office européen des brevets**

(11) Numéro de publication : **0 141 710**
**B1**

(12)                     # FASCICULE DE BREVET EUROPÉEN

(45) Date de publication du fascicule du brevet :
02.12.87

(51) Int. Cl.⁴ : **G 01 G   3/14**

(21) Numéro de dépôt : **84402037.0**

(22) Date de dépôt : **10.10.84**

---

(54) **Appareil de pesage à jauges de contrainte.**

---

(30) Priorité : **26.10.83 FR 8317058**

(43) Date de publication de la demande :
**15.05.85 Bulletin 85/20**

(45) Mention de la délivrance du brevet :
**02.12.87 Bulletin 87/49**

(84) Etats contractants désignés :
**CH DE FR GB IT LI NL**

(56) Documents cités :
**EP-A- 0 052 257**
**EP-A- 0 126 745**
**FR-A- 1 283 046**
**FR-A- 2 441 839**
**FR-A- 2 451 571**
**US-A- 3 460 383**
**US-A- 3 661 220**
**US-A- 3 853 001**

(73) Titulaire : **SEB S.A.**

**F-21260 Selongey (FR)**

(72) Inventeur : **Sarrazin, Michel**
**Marigny à Massingy**
**F-74150 Rumilly (FR)**

(74) Mandataire : **Bouju, André**
**Cabinet Bouju 38 avenue de la Grande Armée**
**F-75017 Paris (FR)**

Jouve, 18, rue St-Denis, 75001 Paris, France

**0 141 710**

## Description

La présente invention concerne un appareil de pesage, tel qu'un pèse-personne ou pèse-aliment ou tout autre appareil de pesage à plateau.

On connaît, dans l'état de la technique selon l'article 54(3) LBE la demande de brevet européen EP-AI-0 126 745 (= WO-AI-84/02/86) concernant un appareil de pesage comportant un socle et un plateau sensiblement parallèle à ce socle, qui est destiné à recevoir la charge à peser. Entre ce plateau et ce socle est disposé un barreau métallique de section carrée ou circulaire dont les extrémités opposées sont fixées rigidement à ce socle et à ce plateau, de façon que ce barreau puisse fléchir sous l'effet de la charge appliquée sur le plateau.

Ce barreau porte quatre jauges de contrainte dont les axes sont parallèles à l'axe du barreau et qui sont connectées électriquement suivant un pont de Wheatstone.

Deux des jauges adjacentes sur le pont Wheatstone sont situées sur l'une des faces du barreau, par exemple celle en regard du plateau et les deux autres jauges sont situées sur la face opposée.

Cette disposition des jauges de contrainte permet de mesurer aux bornes de sortie du pont de Wheatstone un signal qui est théoriquement proportionnel à la force appliquée sur le plateau.

Etant donné que la résultante des forces appliquées sur le plateau peut être située en un point écarté de l'axe de flexion du barreau, ce dernier peut subir des contraintes en torsion qui peuvent engendrer des erreurs de mesure pouvant atteindre 5 à 6 %.

Cet inconvénient a été supprimé dans ce dispositif en branchant deux jauges sensibles à la torsion dont les axes sont à 45° de l'axe du barreau, en série avec les bornes d'alimentation électrique du pont de Wheatstone formé par les quatre jauges de contrainte sensibles à la flexion et en branchant en parallèle avec les deux jauges précitées et l'une des bornes de mesure du signal délivré par le pont de Wheatstone une résistance ajustable.

Cette disposition permet d'annuler les efforts de torsion décelés par les jauges de contrainte sensibles à la flexion.

Cependant, la disposition des quatres jauges de contrainte sensibles à la flexion sur deux faces opposées du barreau compliquent notablement la fabrication en série de l'appareil et son étalonnage.

Le but de la présente invention est précisément de remédier à cet inconvénient, conformément aux moyens figurant dans la revendication 1.

La demanderesse a établi que le mode de connection précité des quatre jauges de contrainte sensibles à la flexion permettait de disposer celles-ci sur une même face du barreau, ce qui facilite considérablement la fabrication en grande série de barreaux équipés de telles jauges.

Ce mode de connexion des jauges permet également de disposer les jauges de contrainte sur une même bande support et de les aligner ainsi d'une manière quasi-parfaite suivant l'axe d'allongement du barreau, ce qui permet en théorie d'éliminer toute composante de torsion susceptible d'affecter le résultat des mesures.

Cependant, l'expérience a montré, même dans ce cas, qu'il était néanmoins avantageux de disposer des jauges sensibles à la torsion symétriquement par rapport au milieu du barreau, branchées en série et reliées respectivement aux bornes d'alimentation électrique du pont de Wheatstone et de brancher une résistance adjustable entre le point commun de ces deux jauges sensibles à la torsion et l'une des bornes de mesure du signal du pont de Wheatstone.

Selon une version préférée de l'invention, les deux jauges sensibles à la torsion sont situées sur la même face que les quatre jauges sensibles à la flexion et ont leur axe incliné de 45° par rapport à l'axe d'alignement des quatre jauges précitées.

Ainsi, l'ensemble des jauges et le circuit électrique d'alimentation et de connexion de ces jauges peuvent être appliqués sur un support unique (ou au plus deux supports) en matière électriquement isolante qui est fixé sur la face en regard du plateau ou la face en regard du socle.

De ce fait, la fabrication des barreaux destinés à équiper des appareils de pesage conformes à l'invention, peut être réalisée dans des conditions économiques optimales.

D'autres particularités et avantages de l'invention apparaîtront encore dans la description ci-après.

Aux dessins annexés, donnés à titre d'exemples non limitatifs :

— la figure 1 est une vue schématique en coupe longitudinale d'un appareil de pesage conforme à l'invention,

— la figure 2 est une vue de dessus du barreau, montrant la disposition des jauges de contrainte,

— la figure 3 est une vue montrant le circuit électrique d'interconnexion des jauges,

— la figure 4 est une vue schématique équivalente à celle de la figure 3 montrant le pont de Wheatstone sous sa représentation classique, auquel on a adjoint deux jauges mesurant la torsion et la résistance adjustable,

— la figure 5 est une vue en coupe longitudinale d'un appareil de pesage conforme à l'invention, et

— la figure 6 est une vue de dessus de cet appareil.

— la figure 7 est une vue en plan d'un barreau conformément à une variante de réalisation, et

— la figure 8 montre un pont de Wheatstone avec deux jauges supplémentaires et une résistance adjustable.

2

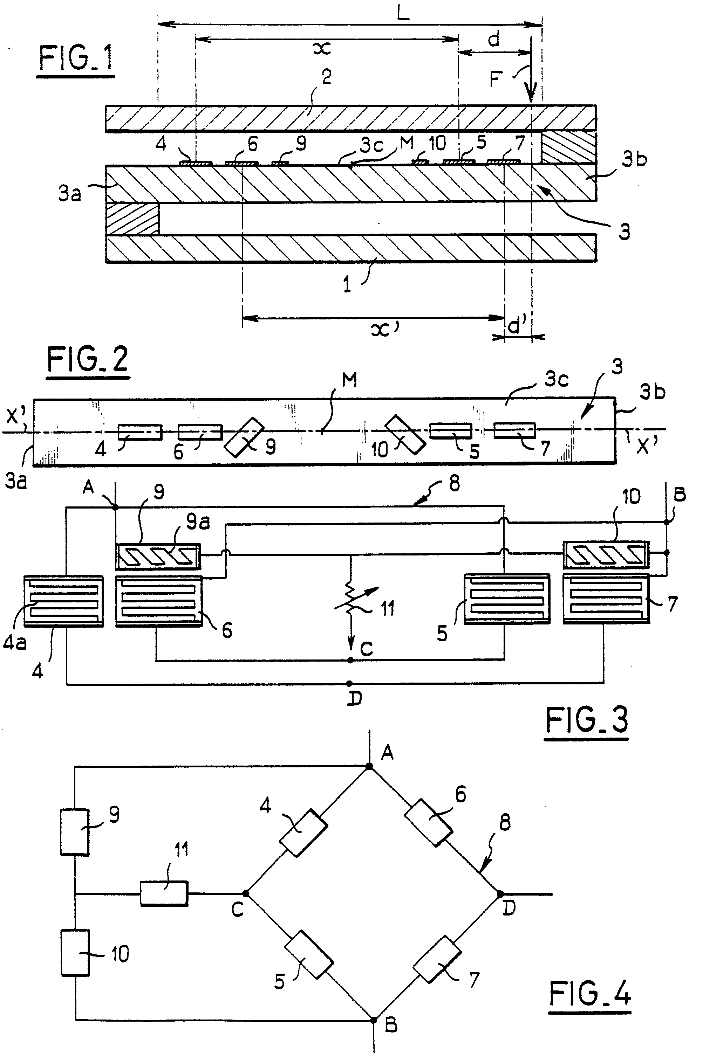

Dans la réalisation de la figure 1, l'appareil de pesage conforme à l'invention comprend un socle 1 et un plateau 2 parallèle à ce dernier et destiné à recevoir la charge à peser, par exemple le poids d'un utilisateur.

Entre ce plateau 2 et ce socle 1 est disposé un barreau métallique de section carrée 3, par exemple en acier trempé, dont les extrémités opposées 3a, 3b sont fixées de façon rigide respectivement au plateau 2 et au socle 1, de façon que le barreau 3 puisse fléchir sous l'effet de la charge appliquée sur le plateau 2.

Comme on le voit sur la figure 2, le barreau 3 porte sur sa face plane 3c située en regard du plateau 2 deux paires de jauges de contrainte 4, 6 ; 5, 7 sensibles à la flexion, alignées sur l'axe longitudinal X-X' du barreau 3 et disposées symétriquement par rapport au milieu M de ce barreau.

Ces jauges de contrainte 4, 6 ; 5, 7 sont constituées par des résistances électriques planes présentant des filaments résistifs parallèles tels que 4a (voir figure 3) décrivant un trajet sinueux. Ces filaments 4a sont alignés avec l'axe X-X' du barreau 3.

Les quatres jauges de contrainte 4, 6 ; 5, 7 sont connectées suivant un pont de Wheatstone 8 (voir figures 3 et 4).

Sur les schémas des figures 3 et 4, les points A et B situés respectivement entre les jauges 4 et 6 et les jauges 5 et 7 désignent les bornes d'alimentation électrique du pont de Wheatstone 8.

Les points C et D situés entre les jauges 4 et 5 et 6 et 7 sont les bornes entre lesquelles est mesuré le signal électrique résultant d'un déséquilibre du pont qui est engendré sous l'effet de la flexion du barreau 3 comme on le décrira plus en détail plus loin.

Sur la même face 3c du barreau 3 et entre les jauges 4, 5 ; 6, 7 sensibles à la flexion, sont disposées deux jauges 9, 10 sensibles à la torsion, symétriquement par rapport au milieu M du barreau. L'axe de ces jauges 9, 10 est incliné de 45° par rapport à l'axe X-X' du barreau 3 (voir figure 2). Le même résultat peut être obtenu en inclinant les filaments parallèles 9a (voir figure 3) de 45° par rapport aux filaments 4a des autres jauges.

Ces deux jauges 9, 10 sensibles à la torsion sont (voir figure 4) branchées en série et reliées respectivement aux bornes d'alimentation A et B du pont de Wheatstone 8.

Une résistance électrique ajustable 11 est branchée en parallèle entre les deux jauges 9, 10 et avec l'une C ou D des bornes de mesure du signal émis par le pont de Wheatstone 8, selon le sens de déviation de la composante parasite de torsion apparue sur les jauges du pont 4, 5 ; 6, 7.

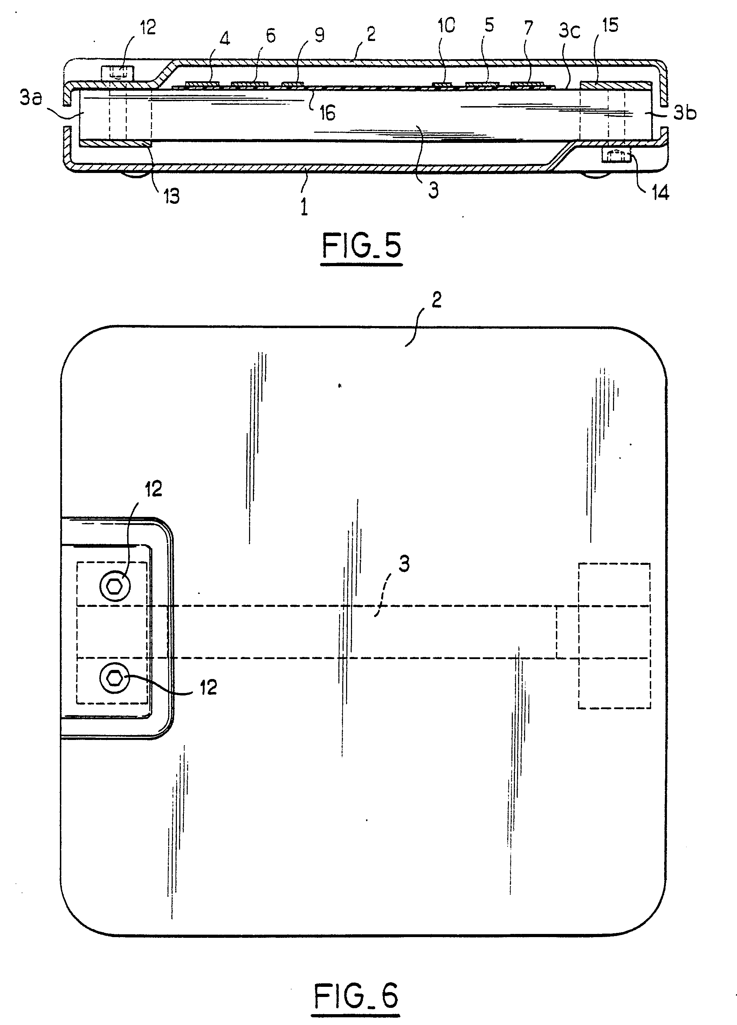

Les figures 5 et 6 représentent un plateau de pesage réalisé conformément à l'invention.

Le barreau 3 qui s'étend entre le socle 1 et le plateau supérieur 2 a son extrémité 3a fixée au plateau 2 au moyen de deux vis 12 traversant le plateau et d'une contre-plaque 13 placée à l'opposé de la tête des vis 12.

De même, l'extrémité 3b du barreau 3 est fixée au socle 1 au moyen de deux vis 14 traversant le socle et d'une contre-plaque 15 placée à l'opposé de la tête des vis 14.

Toutes les jauges 4, 5, 6, 7, 9, 10 sont appliquées sur la face 3c située en regard du plateau 2. L'ensemble de ces jauges est disposé sur un support isolant 16 d'une seule pièce, constitué par exemple d'une feuille en polyimide collée sur la surface du barreau 3.

Le fonctionnement de l'appareil de pesage que l'on vient de décrire est le suivant.

Lorsqu'on applique une charge sur le plateau 2, le barreau 3 tend à fléchir vers le socle 1. Cette flexion du barreau 3 engendre une dilatation ou une contraction des filaments résistifs des jauges 4, 5, 6, 7 qui a pour effet de modifier leur valeur ohmique qui déséquilibre le pont de Wheatstone 8 et engendre un signal électrique entre les bornes C et D de ce dernier.

La mesure de ce signal est convertie en mesure de la charge appliquée sur le plateau 2 à l'aide de moyens connus.

De façon plus précise, le signal mesuré entre les bornes C et D du pont de Wheatstone 8 est proportionnel à la somme algébrique des contraintes suivantes :

$(S_4 - S_5) + (S_6 - S_7)$, relation dans laquelle $\overline{S_4}$, $\overline{S_5}$, $\overline{S_6}$ et $\overline{S_7}$ désignent respectivement les contraintes subies par les jauges 4, 5, 6 et 7.

Ce signal est par conséquent proportionnel à la somme suivante des moments de flexion :

$$[F(x + d) - F \cdot d] + [F(x' + d') - F \cdot d']$$
$$= F \cdot x + F(x')$$
$$= F(x + x')$$

F étant (voir figure 1) la force appliquée sur le plateau 2,

x la distance entre les jauges 4 et 5,

x' la distance entre les jauges 6 et 7,

d la distance entre la jauge 5 et le point d'application de la force F, et

d' la distance comprise entre la jauge 7 et le point d'application de la force F.

Etant donné que x et x' sont des constantes, le signal mesuré est proportionnel à la force F quel que soit le point d'application de cette force sur le plateau 2.

Ce résultat est ainsi obtenu avec les quatre jauges sensibles à la flexion 4, 6 ; 5, 7 alignées sur une même face 3c du barreau 3.

Dans le cas du dispositif décrit par la demande de brevet européen précitée, les positions des jauges

3

6 et 7 dans le pont de Wheatstone étaient inversées par rapport à celles proposées par la présente invention.

Ainsi, pour obtenir que le signal émis par le pont de Wheatstone soit proportionnel aux contraintes subies par les jauges, il fallait que les deux paires de jauges soient disposées sur deux faces opposées du barreau, ce qui compliquait considérablement la fabrication en grande série des barreaux.

Dans le cas de la présente invention, il est possible d'obtenir un alignement quasi parfait des jauges 4, 6 ; 5, 7 suivant l'axe X-X' du barreau 3.

Cependant, l'expérience montre qu'un écart d'alignement, même très faible de ces jauges crée un signal parasite qui fausse légèrement la mesure. Cet inconvénient est évité par les deux jauges 9 et 10 sensibles à la torsion. Lorsque le barreau 3 subit une légère torsion, ces jauges génèrent un signal qui corrige le signal mesuré entre les bornes C et D du pont de Wheastone. Le signal engendré par la torsion est réglé en ajustant la résistance 11 qui est reliée à la borne C ou D lors du montage de l'appareil, selon le sens du signal parasite de torsion.

Par ailleurs, la disposition des jauges de contrainte sur une même face du barreau 3 permet de séparer nettement la paire de jauges 4, 6 de la paire des jauges 5, 7. Ainsi, on augmente la pente du signal proportionnel à la contrainte, c'est dire la sensibilité de l'appareil de pesage.

Cette pente est égale à la relation :

$$a = 3 \cdot K \cdot (x/E \cdot H^3) \text{ en } V \cdot V^{-1} \cdot kg^{-1}$$

dans laquelle K est la constante des jauges, x la distance entre les jauges, H l'épaisseur d'un barreau de section carrée et E le module d'Young de ce barreau.

Ainsi, pour un barreau de longueur L = 149 mm, de côté H = 18 mm, de module d'Young E = 22 000 daH/mm² et avec x = 109 mm, on obtient une pente $a = 5,097 \ 10^{-6} \ V \times V^{-1} \times kg^{-1}$.

La pente mesurée est légèrement plus faible que la pente théorique calculée par la relation ci-dessus, car les deux jauges de compensation de torsion 9 et 10 diminuent légèrement l'amplitude du signal.

Le signal mesuré entre les bornes C et D du pont de Wheatstone atteint cependant une valeur maximale et présente une dérive en température peu importante étant donné que les jauges sont disposées suivant un pont de Wheatstone complet.

Dans la réalisation décrite précédemment, une disposition particulière des jauges de contraintes dans un pont de Wheatstone permet d'obtenir un signal linéaire, proportionnel au poids disposé sur le plateau 2, et indépendant du point d'application de ce poids sur le plateau.

Il subsiste cependant un inconvénient lorsqu'une très grande précision est demandée à l'appareil de pesage, car un déplacement, selon l'axe longitudinal du barreau 3, du point d'application de la force, se traduit par une variation du signal de part et d'autre d'un point central.

Ce phénomène est dû à un déplacement de la fibre neutre du barreau, de telle sorte que les moments d'inertie, au droit des jauges de contrainte, ne sont pas constants lors du déplacement de la force le long de l'axe longitudinal du corps d'épreuve.

En effet, nous pouvons décomposer un poids appliqué sur le plateau 2 en une composante parallèle à celui-ci (compression ou tension) et une composante perpendiculaire.

On observe un déplacement de la fibre neutre, laquelle génère les écarts de signaux mesurés lorsque le poids est appliqué à chaque extrémité du capteur pour un barreau 3 de section rectangulaire :

soit $\varepsilon$ = élongation relative
F = force
a = largeur
h = hauteur du barreau
l = longueur du barreau
E = module d'Young
V = distance entre l'axe longitudinal du barreau et un point
I = moment d'inertie

$$\varepsilon = \frac{\vec{F} \, 1}{E \, I/V} + \frac{\vec{T}}{bh}$$

en développant, on obtient

$$\varepsilon = \frac{P \, (12 \, I \, V \cos \alpha + Eh \sin \alpha)}{E \, bh3}$$

$$\varepsilon = 0 \Leftrightarrow 12 \, I \, V \cos \alpha = - \, E \, h \sin \alpha$$

$$V = - \frac{E \, h \sin \alpha}{12 \, I \cos \alpha}$$

On constate que le signe et la valeur de V dépendent de α donc de la position du poids.

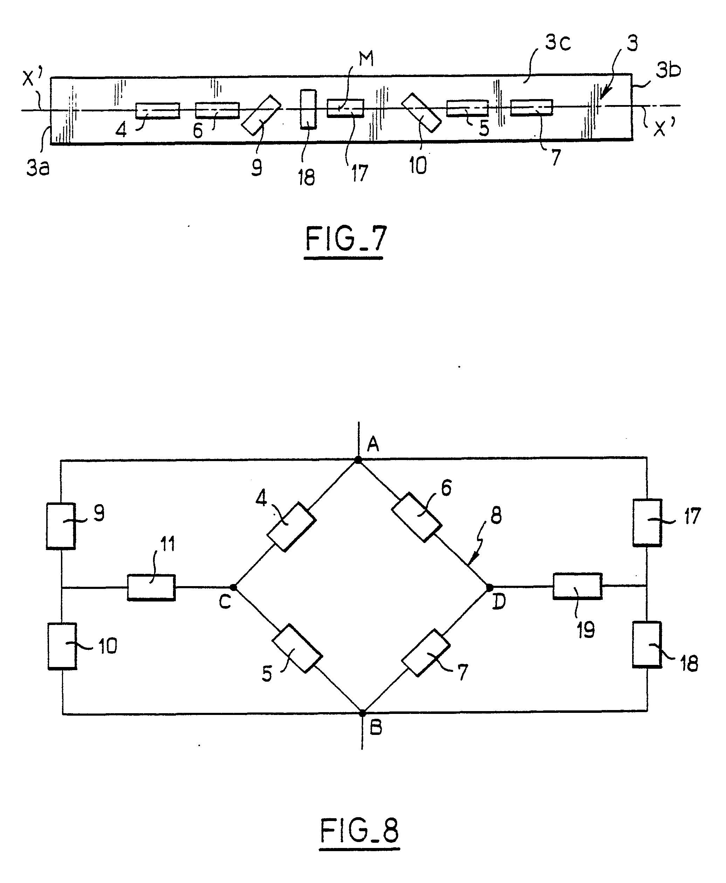

Pour éviter l'inconvénient ci-dessus, l'amélioration selon l'invention consiste à placer près du centre M du barreau 3 (voir figure 7), deux jauges 17 à 18, la jauge 17 étant alignée suivant X-X' et la jauge 18 perpendiculaire à cet axe.

La figure 8 montre comment les jauges 17 et 18 sont branchées au pont de Wheatstone. La jauge 17 est reliée à la borne A et la jauge B est reliée à la borne B. Elles sont également reliées entre elles et connectées à la borne D au moyen d'une résistance 19 qui permet d'ajuster le déplacement selon l'axe longitudinal X-X' du barreau 3.

L'ajustement de cette résistance est effectué de la façon suivante :

— un même poids est disposé successivement à chaque extrémité du barreau 3 et on note l'écart du signal,

— selon le signe de cet écart, on connecte le pont d'ajustement à la borne C ou D,

— on ajuste la valeur ohmique de la résistance 19 proportionnellement à l'amplitude du signal, de telle sorte qu'il n'y ait plus d'écart de la valeur de ce signal suivant la position d'application de la force suivant l'axe du barreau 3.

Bien entendu, l'invention n'est pas limitée à l'exemple que l'on vient de décrire et on peut apporter à celui-ci de nombreuses modifications sans sortir du cadre de l'invention.

Ainsi, plusieurs barreaux identiques pourraient être disposés entre le socle 1 et le plateau 2 selon les charges ou les forces destinées à être appliquées sur ce plateau.

Par ailleurs, les dispositifs destinés à mesurer le signal électrique aux bornes du pont de Wheatstone peuvent être placés soit à l'intérieur de l'appareil de pesage, soit à l'extérieur de celui-ci.

On peut également donner au barreau 3 une section autre que carrée et par exemple rectangulaire ou circulaire, voie même quelconque, pourvu que les moments d'inertie à l'aplomb des jauges soient strictement égaux.

## Revendications

1. Appareil de pesage comprenant un socle (1) et un plateau (2) sensiblement parallèle à ce socle et destiné à recevoir la charge à peser, au moins un barreau métallique (3) disposé entre ce socle et ce plateau, ayant ses extrémités (3a, 3b) opposées fixées rigidement à ce socle (1) et à ce plateau (2) de façon qu'un barreau puisse fléchir sous l'effet de la charge appliquée sur le plateau, ce barreau portant sur une même face plane (3c) deux paires (4, 6 ; 5, 7) de jauges de contrainte sensibles à la flexion sensiblement alignées sur l'axe longitudinal (X-X') du barreau, connectées électriquement suivant un pont de Wheatstone (8) et deux jauges de contrainte (9, 10) sensibles à la torsion branchées à ce dernier pour annuler les efforts de torsion décelés par les jauges de contrainte sensibles à la flexion, les jauges de chaque paire (4, 6 ; 5, 7) étant connectées en opposition sur le pont de Wheatstone et les deux jauges (9, 10) sensibles à la torsion étant branchées en série et reliées respectivement aux bornes d'alimentation (A, B) du pont de Wheatstone (8) et une résistance ajustable (11) étant branchée en parallèle entre les deux jauges (9, 10) sensibles à la torsion et avec l'une (C ou D) des bornes de mesure du signal du pont de Wheatstone.

2. Appareil conforme à la revendication 1, caractérisé en ce que les deux jauges (9, 10) sensibles à la torsion sont situées sur la même face (3c) que les quatre jauges (4, 6 ; 5, 7) sensibles à la flexion et ont leur axe incliné de 45° par rapport à l'axe d'alignement (X-X') des quatre jauges précitées.

3. Appareil conforme à la revendication 2, caractérisé en ce que les deux jauges (9, 10) sensibles à la torsion sont situées symétriquement par rapport au milieu du barreau et entre ou à l'extérieur des deux paires de jauges (4, 6 ; 5, 7) sensibles à la flexion.

4. Appareil conforme à l'une quelconque des revendications 2 ou 3, caractérisé en ce que l'ensemble des jauges (4, 6 ; 5, 7 ; 9, 10) et le circuit électrique (8) d'alimentation et d'interconnexion de ces jauges sont disposés sur un support unique en matière électriquement isolante qui est fixée sur la face (3c) du barreau (3).

5. Appareil conforme à la revendication 4, caractérisé en ce que la face (3c) est celle située en regard du plateau 2, ou celle en regard du socle.

6. Appareil conforme à l'une des revendications 1 à 5, caractérisé en ce qu'il comprend en outre, près du milieu (M) du barreau (3), une jauge (17) alignée suivant l'axe (X-X') du barreau et une jauge (18) perpendiculaire à cet axe, ces deux jauges (17) (18) étant branchées en série et reliées respectivement aux bornes (A, B) du pont de Wheatstone (8) et en ce qu'une résistance ajustable (19) est branchée en parallèle entre les deux jauges (17) (18) et avec l'une (C ou D) des bornes de mesure du signal du pont de Wheatstone.

## Claims

1. A weighing machine comprising a base (1) and, disposed substantially parallel thereto, a tray or platform or the like (2) adapted to receive the load to be weighed, at least one metal bar (3) being disposed between the base (1) and the tray or the like (2) and having its opposite ends (3a, 3b) rigidly secured to the base (1) and tray (2) so that one bar (3) can yield under the load acting on the tray, the bar having on a single plane surface (3c) two pairs (4, 6 ; 5, 7) of bending-responsive stress gauges aligned substantially on the longitudinal axis (X-X') of the bar and electrically connected as a Wheatstone bridge (8) and two torsion-responsive stress gauges (9, 10) connected to the Wheatstone bridge (8) to cancel out torsion efforts detected by the bending-responsive strain gauges, the gauges of each pair (4, 6 ; 5, 7) being connected in opposition to the Wheatstone bridge while the two torsion-responsive gauges (9, 10) are connected in series and connected to the input terminals (A, B respectively) of the Wheatstone bridge (8), a variable resistance (11) being connected in parallel between the two torsion-responsive gauges (9, 10) and to one (C or D) of the signal-measuring terminals of the Wheatstone bridge.

2. A machine according to claim 1, characterised in that the two torsion-responsive gauges (9, 10) are disposed on the same surface (3c) as the four bending-responsive gauges (4, 6 ; 5, 7) and have their axis inclined at 45° to the axis of alignment (X-X') of the aforesaid four gauges.

3. A machine according to claim 2, characterised in that the two torsion-responsive gauges (9, 10) are arranged symmetrically of the centre of the bar (3) and between or outside the two pairs of bending-responsive gauges (4, 6 ; 5, 7).

4. A machine according to claim 2 and/or 3, characterised in that all the gauges (4, 6 ; 5, 7 ; 9, 10) and the electrical circuit (8) supplying and interconnecting the same are disposed on a single electrically insulating support secured to the bar surface (3c).

5. A machine according to claim 4, characterised in that the surface (3c) is the surface disposed opposite the tray (2) or opposite the base (1).

6. A machine according to any of claims 1-5, characterised in that it also comprises near the centre (M) of the bar (3) a gauge (17) aligned along the bar axis (X-X') and a gauge (18) perpendicular thereto, the two gauges (17, 18) being connected in series and connected to the Wheatstone bridge terminals (A, B respectively) ; and a variable resistance (19) is connected in parallel between the two gauges (17, 18) and to one (C or D) of the signal-measuring terminals of the Wheatstone bridge.


**Patentansprüche**

1. Wiegegerät mit einem Sockel (1) und einer im wesentlichen zu diesem Sockel parallelen Platte (2) zur Aufnahme der zu wiegenden Last, wenigstens einem metallischen Stab (3), der zwischen diesem Sockel und dieser Platte angeordnet ist und dessen einander gegenüberliegende Enden (3a, 3b) starr an diesem Sockel (1) und an dieser Platte (2) befestigt sind, dergestalt, daß ein Stab unter der Wirkung der auf diese Platte ausgeübten Last ausgelenkt werden kann, wobei dieser Stab auf einer selben ebenen Fläche (3c) zwei Paare (4, 6 ; 5, 7) von Beanspruchungs-Meßwertgebern aufweist, die auf Biegung ansprechen, im wesentlichen entlang der Längsachse (X-X') des Stabes ausgerichtet sind und elektrisch in einer Wheatstone-Brücke (8) geschaltet sind, und zwei Beanspruchungs-Meßwertgeber (9, 10) aufweist, die auf Torsion ansprechen und mit letzterer verbunden sind, um die Torsionsbeanspruchungen zu annullieren, welche von den auf Biegung ansprechenden Beanspruchungs-Meßwertgebern erfaßt werden, wobei die Meßwertgeber jedes Paares (4, 6 ; 5, 7) in der Wheatstone-Brücke entgegengesetzt geschaltet sind und die zwei Meßwertgeber (9, 10), die auf Torsion ansprechen, in Reihe geschaltet sind und jeweils mit den Speiseanschlüssen (A, B) der Wheatstone-Brücke (8) verbunden sind, und wobei ein einstellbarer Widerstand (11) parallel zwischen den zwei auf Torsion ansprechenden Meßwertgebern (9, 10) geschaltet und mit einem (C oder D) der Signal-Meßanschlüsse der Wheatstone-Brücke verbunden ist.

2. Gerät nach Anspruch 1, dadurch gekennzeichnet, daß die zwei auf Torsion ansprechenden Meßwertgeber (9, 10) auf derselben Fläche (3c) wie die vier anderen Meßwertgeber (4, 6 ; 5, 7), die auf Biegung ansprechen, angeordnet sind und eine um 45° gegenüber der Ausfluchtungsachse (X-X') der vier anderen vorgenannten Meßwertgeber geneigte Achse aufweisen.

3. Gerät nach Anspruch 2, dadurch gekennzeichnet, daß die zwei auf Torsion ansprechenden Meßwertgeber (9, 10) symmetrisch in bezug auf die Mitte des Stabes und zwischen zwei Paaren von auf Biegung ansprechenden Meßwertgebern (4, 6 ; 5, 7) oder außerhalb derselben angeordnet sind.

4. Gerät nach einem der Ansprüche 2 und 3, dadurch gekennzeichnet, daß die Gesamtheit der Meßwertgeber (4, 6 ; 5, 7 ; 9, 10) und die elektrische Schaltung (8) zur Versorgung und zum Zusammenschalten dieser Meßwertgeber auf einem einzigen Träger aus elektrisch isoliertem Material angeordnet sind, der auf der Fläche (3c) des Stabes (3) befestigt ist.

5. Gerät nach Anspruch 4, dadurch gekennzeichnet, daß die Fläche (3c) diejenige ist, welche gegenüber der Platte (2) oder gegenüber dem Sockel liegt.

6. Gerät nach einem der Ansprüche 1 bis 5, dadurch gekennzeichnet, daß es ferner in der Nähe der Mitte (M) des Stabes (3) einen Meßwertgeber (17) aufweist, welcher entlang der Achse (X-X') des Stabes ausgerichtet ist, und einen zu dieser Achse senkrechten Meßwertgeber (18) umfaßt, wobei diese zwei Meßwertgeber (17) (18) in Reihe geschaltet und jeweils mit einem der Anschlüsse (A, B) der Wheatstone-Brücke (8) verbunden sind, und daß ein einstellbarer Widerstand (19) parallel zwischen die zwei Meßwertgeber (17) (18) und einen (C oder D) der Signal-Meßanschlüsse der Wheatstone-Brücke geschaltet ist.

FIG.1

FIG.2

FIG.3

FIG.4

FIG.5

FIG.6

FIG_7

FIG_8